Europäisches Patentamt

European Patent Office

Office européen des brevets

(11) Publication number: **0 476 747 A1**

# EUROPEAN PATENT APPLICATION

(21) Application number: **91202288.6**

(22) Date of filing: **09.09.91**

(51) Int. Cl.5: **G01N 19/02**

(30) Priority: **18.09.90 NL 9002046**

(43) Date of publication of application:
**25.03.92 Bulletin 92/13**

(84) Designated Contracting States:
**AT BE DE FR GB IT LU NL**

(71) Applicant: **HOOGOVENS GROEP B.V.**
**P.O. Box 10.000**
**NL-1970 CA IJmuiden(NL)**

(72) Inventor: **Heijne, Johannes Cornelis, Ing.**
**Dotterbloem 15**
**NL-1911 PB Uitgeest(NL)**
Inventor: **Emmens, Wilko Cornelis, Ir.**
**Vroegeling 12**
**NL-1964 KP Heemskerk(NL)**
Inventor: **Jongenburger, Petrus, Prof. Ir.**
**Veldhuttenweg 2**
**NL-7261 LK Ruurlo(NL)**

(74) Representative: **Hansen, Willem Joseph Maria et al**
**HOOGOVENS GROEP B.V. P.O. Box 10.000**
**NL-1970 CA Ijmuiden(NL)**

(54) **Apparatus and method for friction testing.**

(57) Apparatus for testing friction has a pressing punch (10) a press (5) for pressing the punch (10) against a test piece held by a holder (18) and a drive (14,15) for causing relative rotation of the punch (10) and the holder (18) about an axis perpendicular to the tested surface. For testing surfaces of metal pieces, especially coated surfaces, the punch (10) carries at least one projecting test tool (22) and the relative rotation is for less than one complete revolution.

FIG. 1

The invention relates to apparatus for testing, and thus determining the frictional property of a surface of a test piece, particularly a metal test piece having a surface coating, e.g. steel sheet or plate.

Over the last few years there has been a great increase in use of steel plate provided with a coating of a metal or a paint. In order to be able to predict and control the behaviour of such plate during processing, experimental and theoretical research is being carried out into its deforming and processing properties. The deforming properties which are of importance in deformation techniques such as deep drawing, bending or roller deforming, are influenced by, in addition to the mechanical properties of the steel plate, the friction between the steel plate and the tool. The friction is dependent on a number of parameters of which the most significant are the speed of deformation, the surface pressure, the surface hardness, the viscosity of the lubricants used and the surface roughness of both the plate material used and the tool used. In particular in the case of cold rolled steel plate covered with a coating, the coating has great influence on surface phenomena and consequently on the friction, but not on other deformation properties, or scarcely so.

In determining friction properties in plate material, in particular coated steel plate, use is made of a friction tester. A friction tester known from practice in this art comprises a pair of pressing punches, each provided with a flat test surface. The two test surfaces of the two pressing punches are brought toward each other by press means and pressed against both sides of a test plate placed between the pressing punches. By movement means, the test plate is drawn through between the pressing punches, the test plate being held in a holder.

There are a number of disadvantages with this friction tester. One significant disadvantage occurs if the test surface of the pressing punch is not flat or if the two test surfaces are not pressed together parallel with one another, as a result of which an uneven surface pressure is exerted on the test plate. As a solution for this problem it is proposed to suspend the two pressing punches in a frame so that they self-adjust to each other. Only a small improvement is achieved by this: if the points of rotation of the self-adjusting pressing punches are spaced too far apart, the pressing punches become self-clamping whereby again an uneven surface pressure occurs. In order to bring the points of rotation closer together, the pressing punches must be made thinner, at least locally, which leads to deformation of the pressing punches and once again an uneven surface pressure. Another disadvantage of the known friction tester is that a tensile force is exerted on the test plate during testing.

In the case of high friction forces, in particular with thin test plates, the stress in the test plate may become higher than the yield point so that plastic deformation occurs. Plastic deformation is an irregular phenomenon and may lead to the path of the test plate being hard to control between the two pressing punches being hard to control. Flow lines on the surface of the test plate influence the surface quality and consequently the test result. The plastic deformation may even lead to loosening of the coating from the test plate. As a consequence of this the known friction tester is limited in the smallest thickness of the test plate and limited in the surface pressure which may be used for testing.

Another disadvantage is that testing takes place on both sides of the plate simultaneously. Where the coatings on the two sides differ from one another, it is no longer possible to distinguish the effect of each of the coatings. The known friction tester is not capable of determining the friction properties on one side of a single test plate.

Other prior art to be mentioned is DE-A-1960031 which describes a friction tester for paper or the like, in which the test piece lies between two discs. The load applied is the weight of one disc. One disc is rotated at constant speed and the turning movement of the other is measured.

EP-A-297643 discloses a tester for wear and friction between two surfaces of two different materials. The two test pieces are held in holders and pressed against each other, while one is rotated. Illustrated is an eccentric disc whose peripheral surface is pressed against a flat disc. Such apparatus is not suitable for determining the friction property of a flat plate by moving a tool uniformly over the plate.

JP-A-61-117430 shows an apparatus for testing sliding resistance in which a sample is rotated about an axis when pressed against a contact surface. The surfaces are prependicular to the rotational axis.

The object of the invention is to provide an apparatus for friction testing by which the disadvantages described above may be at least partly avoided. The invention also seeks to provide a method of friction testing in which these disadvantages are at least partly overcome.

The friction tester in accordance with the invention has a pressing punch having at least one projecting test tool to be pressed against a surface of a test piece, and pressing means for so pressing the pressing punch. A holder is provided for the test piece. Movement means are provided to cause relative rotational movement of the pressing punch and the holder around an axis perpendicular to the tested surface of the testpiece. Control means are provided which are capable of limiting the relative rotational movement to less than one complete revolution.

The test tool may be spaced from the axis of rotation, so that a circular track is tested. By limiting to less than one revolution, it is avoided that a tested surface portion is tested again. A plurality of test tools spaced around the axis may be employed, either equally spaced from the axis or at different spacings.

With the apparatus in accordance with the invention those forces on the pressing punch which cause the self-clamping effect, can cancel or at least partly cancel each other out. It is possible by simple means to make the pressing punch and, if required, the holder so sturdy that under load they deform very slightly. In testing this then prevents, or at least reduces, uneven distribution of surface pressure. The holder supports the test piece fully and against rotation. A high surface pressure may also be exerted on the test piece without the material having to be exposed during testing to high tensile forces in order to counteract the friction forces. This provides the advantage that with the friction tester in accordance with the invention tests may be done on very thin test plates. Testing takes place on one side of the test plate, whereby test plates with a differing coating on the two sides may be tested on each side individually without affecting the other side.

The pressing punch comprises at least one test tool on a side facing the holder. The test tool may have dimensions and shape which match the test to be carried out. Applicable test tool shapes are a cylinder for a line contact or a pointed shape for a point contact. A point contact is important when inspecting for de-bonding of a surface coating and when inspecting for scoring between tool and plate material. If required the test tool may be fitted detachably in the pressing tool thus permitting fast replacement of the test punch and rapid visual inspection of its surface.

In a preferred embodiment, the pressing punch comprises a plurality of test tools distributed uniformly in a circle the centre point of which lies on the axis of rotation. The pressure with which the pressing means push the pressing punch against the test piece is likewise uniformly distributed, so that an even better bearing pressure between the tools and test piece is obtained. Moreover the forces causing the self-clamping effect cancel each other out. This preferred embodiment enables a very rigid construction because the pressing punch may be made heavy. This is of particular importance when testing with high surface pressures.

In another embodiment the pressing punch comprises a plurality of test tools, of which at least two lie at different distances from the axis of rotation. As a result of the relative rotary movement of pressing punch and holder the pressing punch after no more than one revolution of the pressing punch relative to the holder comes to a place on the test piece where the tool has already been in contact with it. In some circumstances it may happen that this affects the test results. With this embodiment it is possible to obtain a big relative displacement of pressing punch relative to holder without a place on the test piece coming contact with the pressing tool more than once. This embodiment may be used to particular advantage together with test tools with a point shape. The test tools may then be placed in radial direction at a slightly different distances while still retaining a pressing punch well balance statistically.

A particular simple construction of the apparatus in accordance with the invention is obtained when the movement means drives or can be coupled to drive the holder. This achieves the advantage that while the test is being carried out the pressing punch that is coupled to the pressing means remains still but moves relative to a frame of the apparatus. This also allows greater freedom in the choice of the pressing means and the movement means of the holder.

Preferably pressing means are suitable for exerting a surface pressure of betwen 0.5 MPa and 1000 MPa between pressing tool and test piece at the contact surface of pressing tool and test piece. High surface pressures are particularly important with test tools shaped as cylinders or points.

In practice a good simulation of deformation processes has been found possible with a apparatus in accordance with the invention in that the movement means are suitable for rotating the test piece at a path velocity of between 1 and 1000 mm/sec relative to the test tool.

With the apparatus in accordance with the invention it is possible to make both the holder and the pressing punch heavy and sturdy, whereby during testing no perceptible deformation or almost no perceptible deformation of either element occurs. In order to eliminate any deformation which may still occur, in order to prevent any alignment problems and in order to compensate for differences in test plate thickness, a specific embodiment of the friction tester, suitably the holder self-adjusts relative to the pressing punch. Self-adjusting constructions as such are known and may comprise for example a cup-and-ball joint or a universal joint.

The method of the invention for testing the frictional property of a surface of a test piece made at least partly of metal, e.g. a coated metal sheet, comprises pressing a test tool of a pressing punch against the tested surface while relatively rotating the test piece and the punch about an axis perpendiular to the surface by an amount of less than one complete revolution, and measuring pressing force and frictional resistance force.

An embodiment of the invention will be described and illustrated by way of non-limitative example with reference to the drawing.

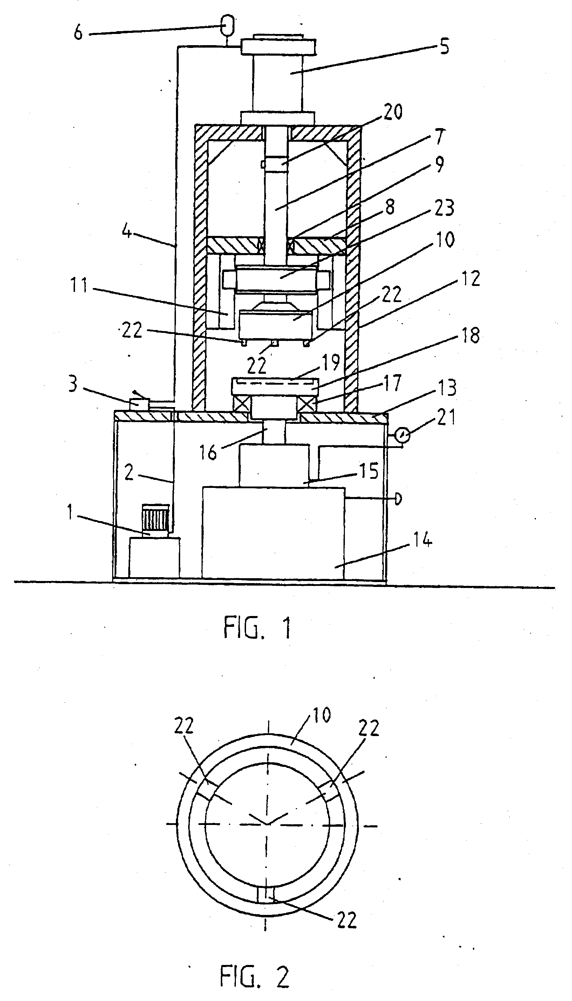

In the drawing Fig. 1 is a schematic representation of a front view of the apparatus for friction testing embodying the invention and Fig. 2 is bottom view of the pressing punch with test tools.

Fig. 1 shows a hydraulic pressurized fluid set from which oil is conveyed along line 2 via valve 3 and line 4 to a hydraulic cylinder 5. An accumulator 6 is also mounted next to the hydraulic cylinder 5. The advancing piston rod of the hydraulic cylinder 5 is indicated by 7. The piston rod 7 is guided through a top plate 8 provided with a bearing ring 9. The piston rod carries a downard facing pressing punch 10 on its end. The hydraulic cylinder 5, top plate 8 and guide 11 are mounted in a frame 12, which is set up on a table 13. Beneath the table 13 there is an electric drive motor 14 whose amount of revolution is adjustable. The output shaft of the electric drive 14 (not shown in the drawing) is coupled to an electromagnetic clutch 15. The output shaft 16 of the electromagnetic clutch 15 is coupled to the holder 18 for test pieces, which is a disc having a recessed upper surface. The electromagnetic clutch 15 makes it possible to couple the electric drive motor 14 to the holder 18 for a brief time, so that the holder 18 is only revolved by a small angle. In the table 13, shaft 16 runs in a socket bearing 17.

A direct servo-controlled drive may be used instead of the drive described here. This avoids the use of a clutch.

The recess 19 is provided in the holder for carrying the test plate. The test plate is thus fully supported all over its under surface. After the test plate is laid in this recess, the pressing punch is moved downwards by means of the hydraulic cylinder 5 and then pressed at a desired force onto the test plate. The amount of the pressure exerted is recorded by means of a pressure sensor 20 which in this embodiment is incorporated in the piston rod 7. By means of the electric drive motor 14 the holder holding the test plate is revolved by a desired amount of revolution. The amount of revolution may be read off on a recording device which is indicated schematically by 21. The friction force which occurs between the test punches held in the pressing punch and the test plate is recorded using a moment meter 23. Moment meter 23 is guided in the guide 11 to prevent it and the piston rod 7 from rotating.

Control means, not shown, for the drive motor and clutch 15 allow the amount of rotation to be selected at less than one revolution, which permits rapid testing. Desirably, the amount of rotation is such that the tested surface is not contacted twice by a test tool of the punch 10.

Fig. 2 shows the pressing punch 10 and three test tools 22 projecting from it. The test punches 22 lie in a circle the centre point of which coincides with the axis of rotation of the holder 18. The angular distance between two adjacent test punches is always 120°C. The test punches shown in Fig. 2 have a square contact surface which presses on the test plate during the test. In practice it is found that a contact surface of approximately 10 x 10mm is quite adequate. The radius of the circle on which the test punches lie is approximately 50mm.

**Claims**

1. Apparatus for testing the frictional property of a test piece, comprising a pressing punch (10) to be pressed against a surface of the test piece, pressing means (5) for pressing the punch (10) against the test piece, a holder (18) for the test piece and movement means (14,15) for causing relative rotational movement of the punch (10) and the holder (18) about a axis perpendicular to said surface of the test piece, characterized in that the punch (10) carries at least one projecting test tool (22) which is pressed against the surface of the test piece and in that there are control means of said movement means (14,15) capable of limiting said relative rotational movement during pressing to less than one complete revolution.

2. Apparatus according to claim 1 wherein the or each said test tool (22) is spaced from said axis of relative rotation.

3. Apparatus according to claim 1 or claim 2 wherein said punch (10) has a plurality of said test tools (22) each spaced from said axis and mutually spaced around said axis.

4. Apparatus according to claim 3 wherein said test tools (22) are equally spaced from said axis.

5. Apparatus according to claim 3 wherein at least two said test tools (22) are spaced at different distances from said axis.

6. Apparatus according to any one of claims 1 to 5 wherein said movement means (14,15) is arranged to drive said holder (18) in rotation.

7. Apparatus according to any one of claims 1 to 6 wherein said pressing means (5) is capable of exerting a surface pressure of between 0.5 and 1000 MPa between said test tool (22) and said test piece at their contact area.

8. Apparatus according to any one of claims 1 to 7 wherein said movement means (14,15) is adapted to cause relative movement of said test tool and said test piece at a velocity of between 1 and 1000 mm/s.

9. Method of testing the frictional property of a test piece made at least partly of metal, comprising pressing a pressing punch (10) against the test piece surface while relatively rotating the punch (10) and the test piece about an axis perpendicular to said surface, and measuring the pressing force and frictional resistance force, characterized in that said punch (10) has at least one projecting test tool (22) which is pressed against said surface and in that the relative rotation is by an amount less than one complete revolution.

10. Method according to claim 9 wherein said test piece is metal sheet having a surface coating at the tested surface.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-1 960 031 (LICENTIA PATENT-VERWALTUNGS-GMBH ) <br> * page 3, line 15 - page 7, line 20; figures 1-6 * <br> --- | 1,9 | G01N19/02 |
| A | EP-A-0 297 643 (SKF INDUSTRIAL TRADING & DEVELOPMENT CO. B.V.) <br> * column 3, line 21 - column 6, line 32; figures 1-5 * <br> --- | 1,9 | |
| A | PATENT ABSTRACTS OF JAPAN <br> vol. 10, no. 300 (P-506)(2356) 14 October 1986 <br> & JP-A-61 117 430 ( JAPAN SYNTHETIC RUBBER CO.,LTD. ) 4 June 1986 <br> * abstract * <br> --- | 1,9 | |
| A | MACHINE DESIGN. <br> vol. 48, no. 6, March 1976, CLEVELAND US <br> page 40; 'Spring loading extends range of friction tester' <br> * the whole document * <br> ----- | 1,9 | TECHNICAL FIELDS SEARCHED (Int. Cl.5 ) <br><br> G01N <br> G01B |

The present search report has been drawn up for all claims

| Place of search | Date of completion of the search | Examiner |
|---|---|---|
| THE HAGUE | 17 OCTOBER 1991 | SARNEEL A.P. |